# EUROPEAN PATENT SPECIFICATION

(11) **EP 1 793 261 B1**
(45) Date of publication and mention of the grant of the patent: **12.08.2009**
(21) Application number: 05425861.1
(22) Date of filing: 01.12.2005
(51) Int. Cl.: G02B 27/01

(54) **Transparent display based on photoluminescent material**
Photolumineszenzmaterial verwendende durchsichtige Anzeige
Afficheur transparent utilisant un matériau photoluminescent

(43) Date of publication of application: 06.06.2007
(73) Proprietor: C.R.F. Società Consortile per Azioni, 10043 - Orbassano (Torino) (IT)
(72) Inventor: Repetto, P., C.R.F. Società Consortile per Azione, 10043 Orbassano (Torino) (IT); Bollea, Denis,C.R.F. Società Consortile per Azione, 10043 Orbassano (Torino) (IT); Bernard, S. ,C.R.F. Società Consortile per Azione, 10043 Orbassano (Torino) (IT); Liotti, Luca, C.R.F. Società Consortile per Azione, 10043 Orbassano (Torino) (IT); Carvignese,C, C.R.F. Società Consortile per Azione, 10043 Orbassano (Torino) (IT); Finizio,R., C.R.F. Società Consortile per Azione, 10043 Orbassano (Torino) (IT)
(74) Representative: Notaro, Giancarlo

(56) References cited:
- EP-A- 1 120 838
- EP-A- 1 433 831
- WO-A-02/058402
- DE-A- 4 211 728
- FR-A- 2 578 797
- GB-A- 2 128 985
- GB-A- 2 260 735
- US-A- 3 918 803
- US-A- 5 743 955
- US-A1- 2004 080 256
- US-A1- 2005 174 635
- US-A1- 2005 242 327
- PATENT ABSTRACTS OF JAPAN vol. 1999, no. 01, 29 January 1999 (1999-01-29) & JP 10 282494 A (CASIO COMPUT CO LTD), 23 October 1998 (1998-10-23)

## Description

### Field of the invention

The present invention relates to devices for displaying information on a transparent medium, particularly for motor vehicles, to be used for the transmission of optical information to a user.

### Known art and disadvantages thereof

The invention relates in particular to a device of the type referred to above, comprising:
- a transparent panel, through which a background is visible;
- a layer of photoluminescent material provided at least on part of said panel;
- radiation-emitting means for emitting ultraviolet radiation or blue radiation; and
- optical means for conveying said radiation emitted by said emitter means (4) on said transparent panel (1),
said photoluminescent material being designed to absorb said radiation emitted by said emitter means (4) and to re-emit visible radiation of a wavelength longer than the one absorbed, so that associated to said visible radiation re-emitted by the photoluminescent material is an image superimposed upon the background, said image carrying said information visible to the user.

Devices of the type referred to above are known, for instance, from the documents Nos. WO 02058402 A2 and US 2005/0174635 A1.

As is known, a motor vehicle comprises many devices for the presentation of information to the driver and/or to the passengers. The amount and content of information of said devices has increased constantly over the years on account of the growing content of information coming from the vehicle systems.

Displays for applications on motor vehicles are generally classified in the following categories:
displays arranged on the instrument panel on board the vehicle, in front of to the driver; these comprise:
   - back-lighted icons, for signalling information regarding the state of the vehicle (e.g., handbrake, direction indicators, lights, headlight and rear-light diagnostics, foglights, rear foglights, engine-oil temperature, parking brake),
   - analogical dials for the indication of the fuel level, engine r.p.m., speed, time, etc.;
   - back-lighted liquid-crystal displays, for alphanumeric information (total kilometres travelled, partial kilometres travelled, etc.); and
   - back-lighted liquid-crystal displays of the dot-matrix type, for transmission of information coming from the computer body (e.g., average speed, average and instantaneous fuel consumption, operating range, etc.);
displays at the centre of the dashboard, in the area half-way between the driver and the passenger; these typically comprise:
   - back-lighted liquid-crystal displays of the active-matrix type, for display of information coming from the GPS navigator (for motor vehicles in the medium-to-high market range), including indications and maps; the same display is typically used for presenting additional information (air-conditioner, radio/CD, telephone, info-telematics, information on cruising coming from the computer body, etc.),
   - as an alternative to the foregoing, back-lighted liquid-crystal displays of the passive-matrix type for display of information coming from the GPS navigator (for motor vehicles in the medium-to-low market range), with the exclusion of the maps;
displays on the windscreen or on a viewer set between the driver and the windscreen; these displays are known as head-up displays (HUDs) and afford the possibility of transmitting the information in the following way:
   - superimposed upon the background, in the periphery of the field of view of the driver, whilst the latter performs the primary task of driving; this reduces the movement of the eyes/head necessary for the driver to gain access to the visual information and hence the time during which attention is taken off the road; or
   - at a certain distance from the driver, typically ranging from 2 m to infinity, in a way that the driver does not have to adapt the focal length of the eye in order to gain access to the information.

HUDs are typically used for transmitting information regarding navigation or information critical for the safety of the vehicle; they can also be used for night vision.

Notwithstanding the possible ergonomic advantages deriving from the use of displays of a HUD type, their diffusion is currently limited by the following factors:
i. cost of the system;
ii. difficulty of installation/alignment;
iii. encumbrance of the optical projection chain, which is typically installed in the dashboard between the projecting visor or sunshade of the instrument panel and the windscreen;
iv. high consumption levels of the light source, in so far as the light that reaches the eye of the driver is only a minimal fraction of the light emitted by the projection chain (the luminance of the image is equal to 10-20% of the luminance at output from the projection chain); this is rendered necessary in that the reflecting screen, whether it be the windscreen or a viewer set between the windscreen and the driver, must transmit at least 80% of the light coming from the road so as not to obstruct the driver's vision of the driver; and
v. reduced angle of visibility, in the sense that a movement of the head of the driver greater than a certain amount (defined by the so-called "head-motion box" or HMB) would lead to the information totally or in part moving out of the field of view of the driver.

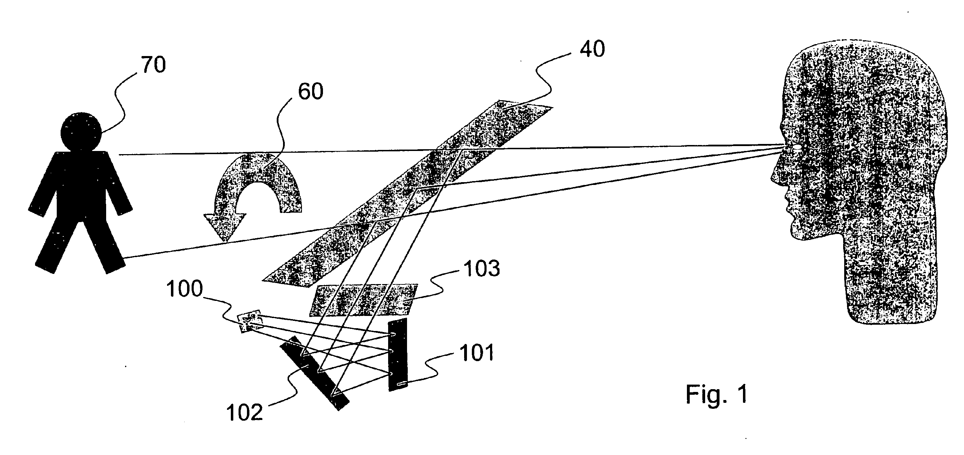

In the HUD systems of the known art (an example of which is represented in Figure 1), the solution of one or more of these problems leads to a complication of another; purely by way of example, the enlargement of the HMB, referred to in point v, entails the use of projection optics of larger diameter, with a consequent increase in costs, referred to in point i, and of the overall dimensions, referred to in point iii.

With reference to Figure 1, the light emitted by an image source 100 (for example, a microdisplay) is collected by a projection optics, made up of a first mirror 101 and a second mirror 102, and is projected on the windscreen 40 through a transparent protective window 103, typically positioned on the dashboard of the vehicle.

The mirror 102 is typically a complex aspherical mirror, the function of which is that of generating a virtual image of the source 100 (in combination with the first mirror 101) and of compensating the distortions of the image deriving from the asphericity of the windscreen 40.

The windscreen 40 reflects a percentage of the light coming from the projection optics towards the eyes of the driver. In this way, the driver perceives a virtual image 60 located at a certain distance from the windscreen (said distance depending upon the projection optics) and superimposed upon the background 70.

In the patent applications Nos. EP05425256.4, EP05425255.6 and EP05425254.9, filed in the name of the present applicant, the purpose is to provide a device for the presentation of information to the driver in a mode similar to that of the HUD devices of the type represented in Figure 1, which does not suffer from the disadvantages mentioned in points i, ii, iii, iv and v.

The above purpose is achieved by using LED sources in the form of a die. A source in the form of a die has a typical surface of just 0.1 mm², which makes possible a minimization of the obstruction of the background on account of said source; the LED sources in the form of a die are integrated in the device using technologies of the chip-on-board (COB) type.

Notwithstanding the advantages of the solution proposed in the patent applications Nos. EP05425256.4, EP05425255.6 and EP05425254.9, the technical solution described therein presents a series of limitations.
- The transparency of the display is in any case limited by the need to use supply paths for the dice, which albeit to a minimal extent are visible to the user; this applies both in the case where wide paths of transparent conductive oxide (for example, indium-tin oxide (ITO) are used in so far as the transparency of the latter decreases as the resistivity decreases and in the case where thin metal paths are used, for example Au, Ag, Cu, or AI).
- The supply paths of the dice are connected to the control electronics, through a connector connected to one of the sides of the panel; this limits the flexibility in the installation of the panel (the panel must be installed in areas close to the rim of the windscreen).
- The content of information is limited by the number of LEDs that can be used; as the number of LEDs increases, the costs of the device increase and at the same time the production yields decrease.
- The limited conductivity of the transparent conductive oxide limits the minimum dimension of the supply paths of the dice and thus limits the density of information (number of LEDs per unit surface).

As already referred to above, the documents Nos. WO 02058402 A2 and US 2005/0174635 A1 illustrate transparent displays based upon photoluminescent material of the type referred to at the beginning of the present description. Both of the patent applications envisage the use of a projection device (defined as "projection assembly" in WO 02058402 A2, and "imaging unit" in US 2005/0174635), i.e., a device that, through an electronic control, enables generation of re-configurable images and their projection on the photoluminescent panel. In particular, the document No. WO 02058402 A2 describes solutions based upon scanning of the beam by electrically controlled mirrors, whereas the document No. US 2005/0174635 describes, in addition to the classic scanning solution, also solutions of the DMD (digital micromirror devices), GLV (grating light valves), and LCoS (liquid crystal on silicon) types.

The above known solutions suffer, however, from a relative complexity, particularly as regards the electronic control necessary to configure the image leaving the projection system. Furthermore, since the projection system operates using UV radiation, it calls for optical systems that are optimized for the UV spectrum and are relatively more costly than optical systems operating in the visible spectrum. Finally, one and the same projection system is used for all the information that is to be displayed to the user, which implies the need for handling fields of view. This results in a larger size of the projection optics and hence high costs and major encumbrance of installation.

A device as set forth in the preamble of claim 1 is known from FR-A-2 578 797.

### Purpose of the invention

The purpose of the present invention is to overcome the limits of the devices of the known art by providing in particular a device that is at the same time simple and versatile to use, affording, for example, the possibility of displaying different combinations of information simultaneously on the display, through the use of relatively simple and low-cost means.

### The invention

With a view to achieving said purpose, the subject of the invention is a device according to claim 1. In this way, the electronic control is simplified, in so far as turning-on of different optical information is obtained simply by turning on the source or the associated set of sources and without re-configuring the projection system (as instead is required for the devices described in the documents Nos. WO 02058402 A2 and US 2005/0174635).

The image associated to a source or to a set of sources covers a small field of view, in so far as the overall field of view visible to the user is obtained as juxtaposition of the fields of view associated to different information. This implies that the beam-shaping optical systems are low-cost ones and that the sources can be positioned in the proximity of the panel or even integrated in the panel itself, so reducing significantly the overall dimensions of installation.

Further preferred and advantageous characteristics are specified in the dependent claims.

The invention will now be described with reference to the annexed plate of drawings, in which:
- Figure 1 illustrates the known art already described above;
- Figures 2-10 illustrate different variants of the display according to the invention with the exception of figures 4b, 5b, 6 and 7 which show embodiments not forming part of the invention; and
- Figures 11 and 12 illustrate spectra of absorption and of emission by photoluminescent materials of micrometric and nanometric dimensions, respectively.

With reference to the figures, the invention envisages a transparent panel, i.e., one capable of transmitting at least in part the light coming from the road (in particular, to an extent greater than 70%), characterized in that at least part of said transparent panel has a surface coating and/or inclusions inside the body of the panel, which are constituted by a photoluminescent material that is able to absorb radiation in the blue and/or UV region of radiation of the spectrum and re-emits radiation of visible wavelength.

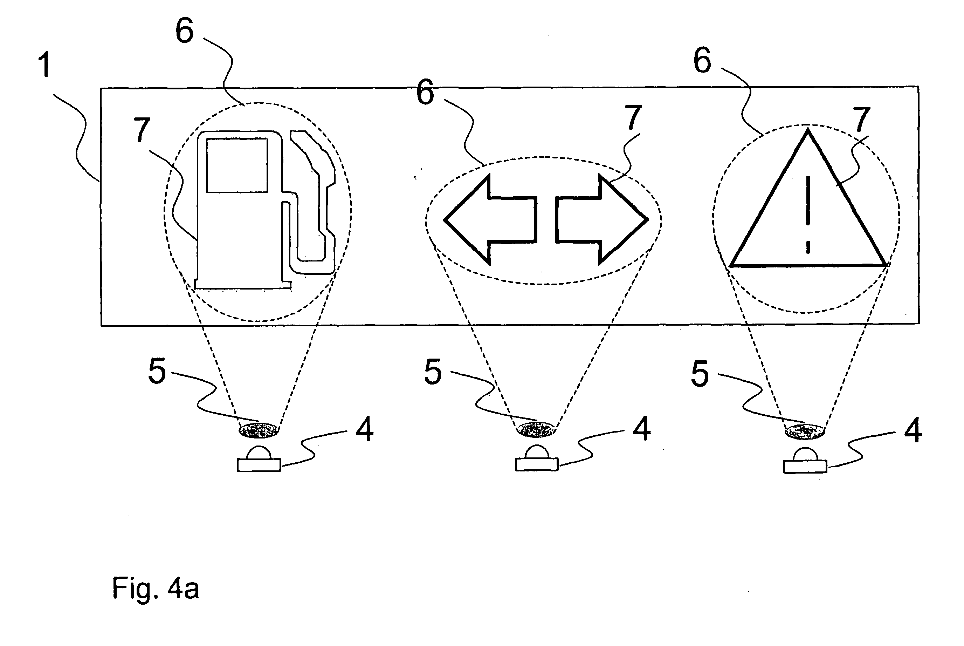

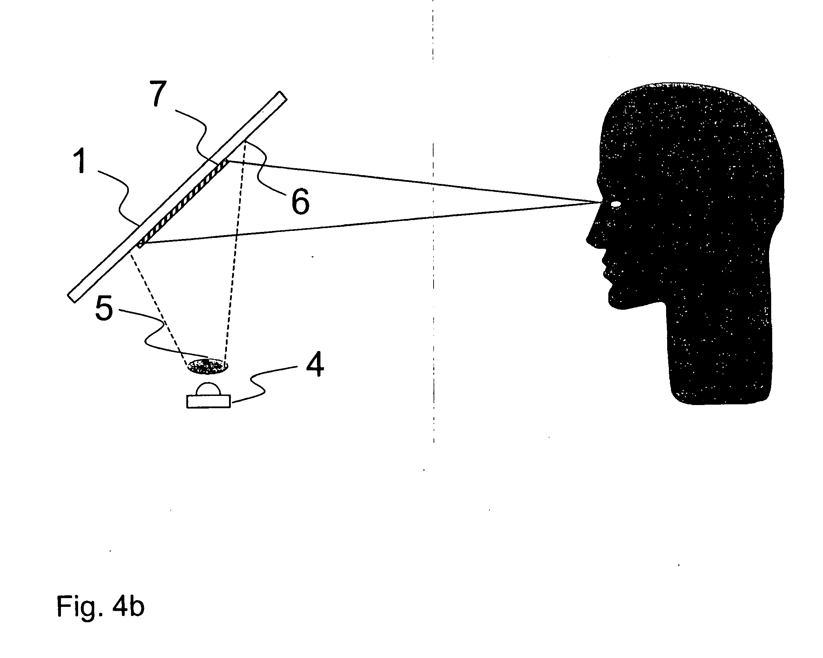

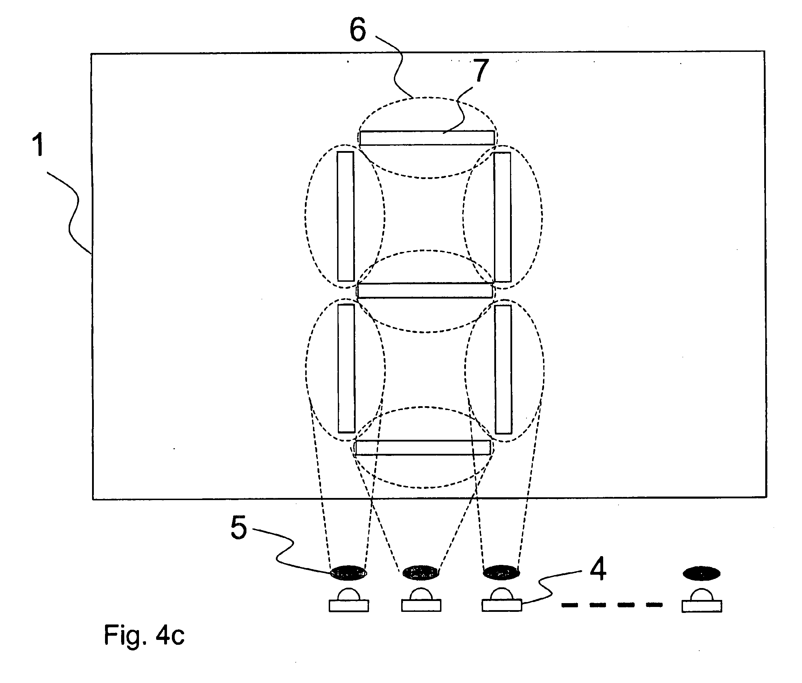

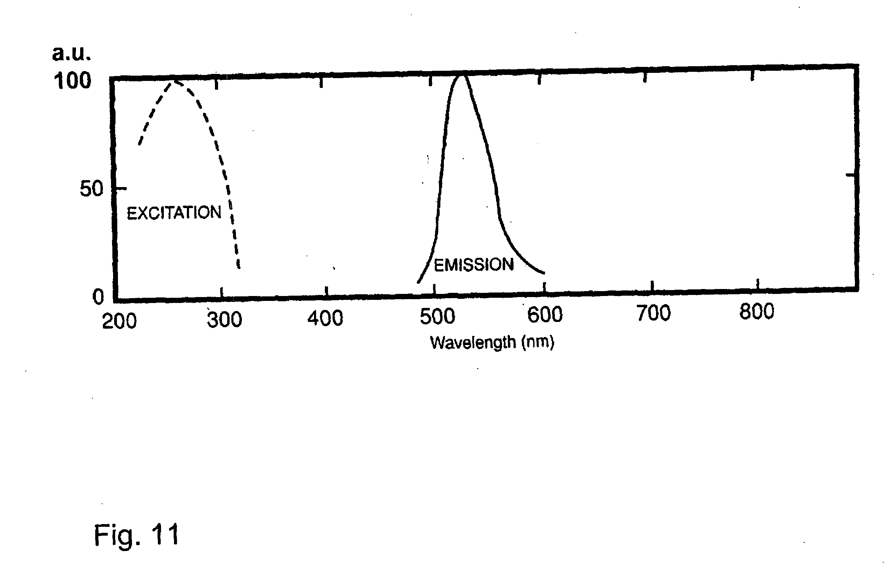

As is evident from Figures 4 to 12, the photoluminescent material is provided in areas 7 of the panel, configured in the form of icons, symbols, pictograms, and/or geometrical shapes, so that turning-on of the panel in at least one of said regions enables furnishing the driver with information superimposed upon the background, said background being visible to the driver through the transparent panel 1.

In a preferred embodiment, represented for example in Figure 4a, turning-on of the panel in any one of said areas 7 is obtained by irradiating said area 7 with UV radiation (wavelength < 380 nm) and/or blue radiation (380 nm < wavelength < 470 nm) so that said radiation will reach only a pre-defined area 6 of the panel, without touching the adjacent areas. This solution enables one or more areas 7 of the panel to be turned on in a selective and independent way according to the information that is to be transmitted to the user.

In a preferred embodiment, said purpose is achieved through a multiplicity of sources 4 of UV radiation and/or blue radiation, each associated to at least one of said photoluminescent areas 7 of the transparent panel 1.

In a preferred embodiment of the invention, the use of beam-shaping optics 5 is envisaged, preferably one for each source 4, operative for directing and conveying the radiation emitted by the corresponding source 4 onto the area 7 of interest of the panel.

In a preferred embodiment, the aim of providing a transparent photoluminescent panel is achieved by using *opaque photoluminescent* materials, i.e., ones not transparent to visible radiation or, alternatively, *diffusive photoluminescent* materials, i.e., ones that transmit at least in part visible radiation but diffuse said radiation so as not to render the background visible, said opaque and/or diffusive photoluminescent materials being deposited only in limited areas of the panel, so as not to obstruct vision of the background significantly.

This purpose is readily achieved if the photoluminescent material is deposited in the form of straight lines, curved lines, or contours such as to delineate the icons, symbols, and/or pictograms.

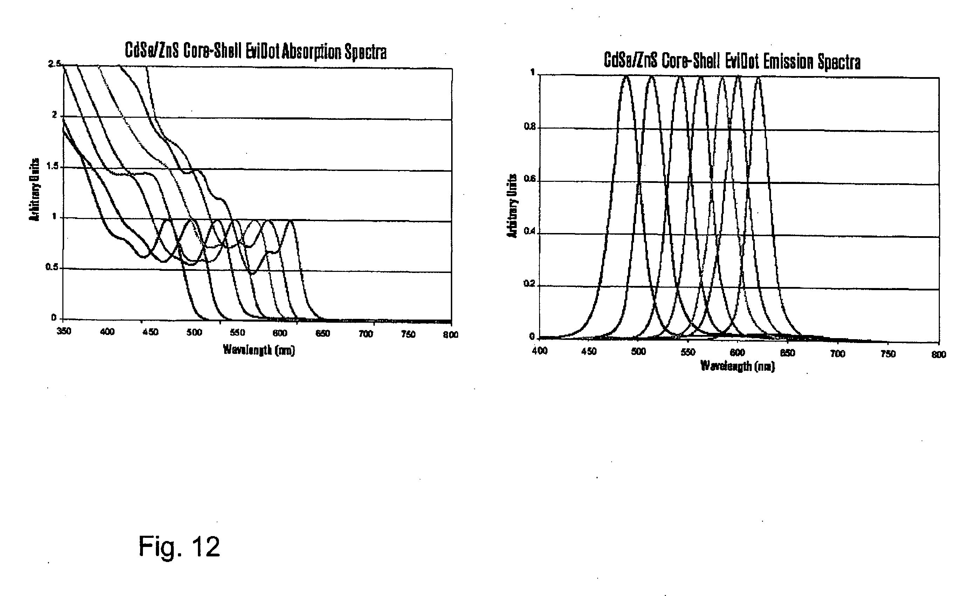

Diffusive photoluminescent materials are typically phosphors constituted by particles of micrometric dimensions, for example of the type used as lining for fluorescent tubes, for example Zn₂SiO₄:Mn (green), Y₂O₃:Eu (red), CaSiO₃:Pb:Mn (orange), MgWO₄ (blue), etc., or for plasma displays, for example (Y,Gd)BO₃:Eu (red), YVO₄:Eu (red), Zn₂SiO₄:Mn (green), BaMg₂Al₁₆O₂₇:Eu (blue), or again for LEDs, for example Ce³⁺-doped (Y,Gd)₃ Al₅O₁₂ (yellow, which combined to blue radiation produces white). The size of the microparticles of phosphorus is close to the wavelength of visible radiation (380-780 nm), this being the reason why visible radiation is markedly diffused by said phosphors. Figure 12 illustrates, by way of example, the spectra of absorption and of emission for a microphosphor of the Zn₂SiO₄:Mn type.

In a further preferred embodiment, the same purpose is achieved by using *transparent photoluminescent* materials, i.e., ones that transmit at least in part visible radiation without diffusing it and thus rendering the background visible through them. Transparent photoluminescent materials can be: i) electroluminescent polymers (light-emitting polymers, or LEPs), for example, polyfluorene or polyphenylenevinylene (PPV); ii) organic molecules with lower molecular weight (small molecules), for example AlQ₃; iii) inorganic molecules of the rare-earth-oxide type (europium oxide, terbium oxide, Y₂O₃:Eu, etc.) in crystalline or amorphous form; iv) semiconductor nanocrystals of type II-VI (CdTe, cdSe, etc.), III-V (GaN, GaP, etc.) or hybrids, also in the form of the core-shell type (e.g., cdSe:ZnS); and v) subnanometric metallic crystals (Ag, Au, Au-Ag alloys, etc.).

A method for the fabrication of subnanometric metalliccrystals referred to in point v) above has been proposed by the present applicant in the patent application No. EP1489133.

In the cases of options iv) and v), the nanocrystals can be dispersed in a polymeric matrix, or else, in an oxide vitreous matrix (for example, SiO₂) ; the nanometric size of the nanocrystals leads to a low interaction between visible radiation and the nanocrystal. Consequently the layer including the nanocrystals does not diffuse visible radiation and enables vision of the background.

By way of example, in the case of cdTe crystals, the typical size of the photoluminescent nanocrystals ranges from 2 nm (photoluminescence in the green) to 5 nm (photoluminescence in the red). Figure 12 illustrates, by way of example, the spectra of absorption and of emission for nanocrystals of a cdSe:ZnS core-shell type (the different curves are associated to different sizes of the nanocrystals).

The emission of visible light by the photoluminescent layer is substantially lambertian, i.e., the information is visible also in the case where the direction of view forms an angle, with respect to the normal to the surface of the panel, of close on 90°. The photoluminescent materials deposited on different areas 7 can be different, in such a way as to produce, when irradiated by UV/blue radiation, radiation of different colours.

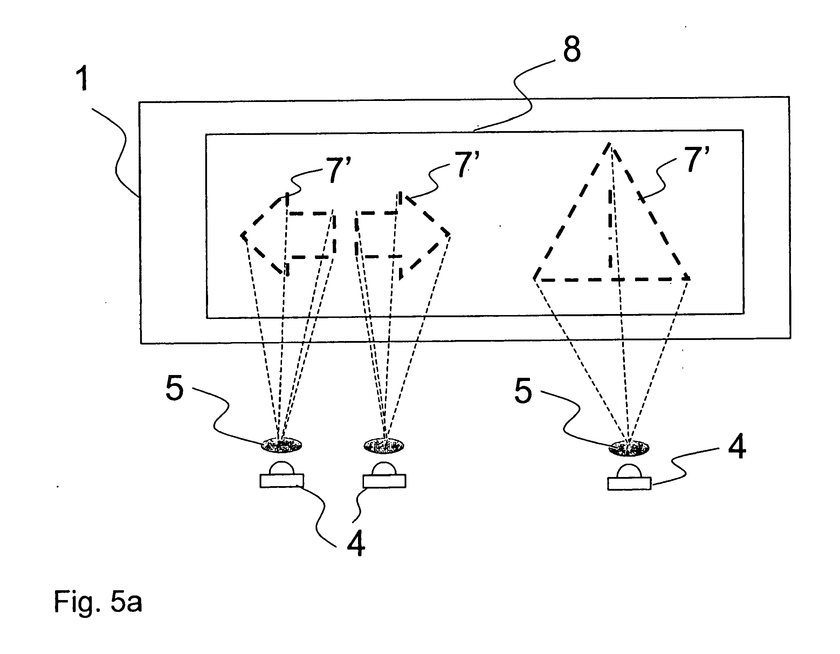

As illustrated in Figure 5a, in the case of transparent photoluminescent materials it is possible to deposit the photoluminescent material in the form of a continuous layer 8 and generate the information on said panel through the use of focusing optics 5 coupled to the sources 4, such as to shape the beam of UV/blue radiation leaving the source 4 into a pre-defined image 7'. The photoluminescent layer "converts" the UV image into an image that is visible for the user.

Said optics 5 can be of the type in refraction, reflection or diffraction. This embodiment affords the advantage that all the UV/blue radiation emitted by the source 4 and shaped by the focusing optics 5 contributes to forming the image 7'.

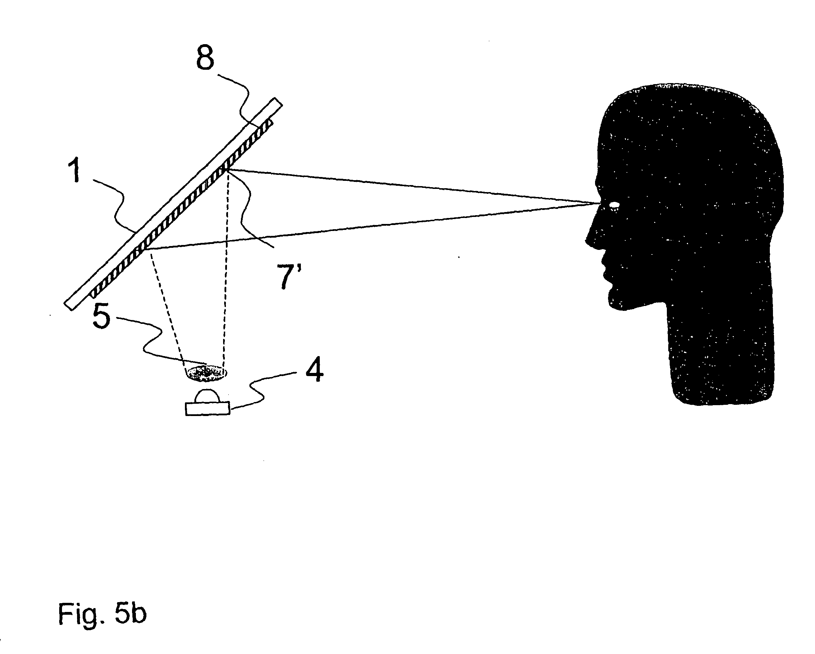

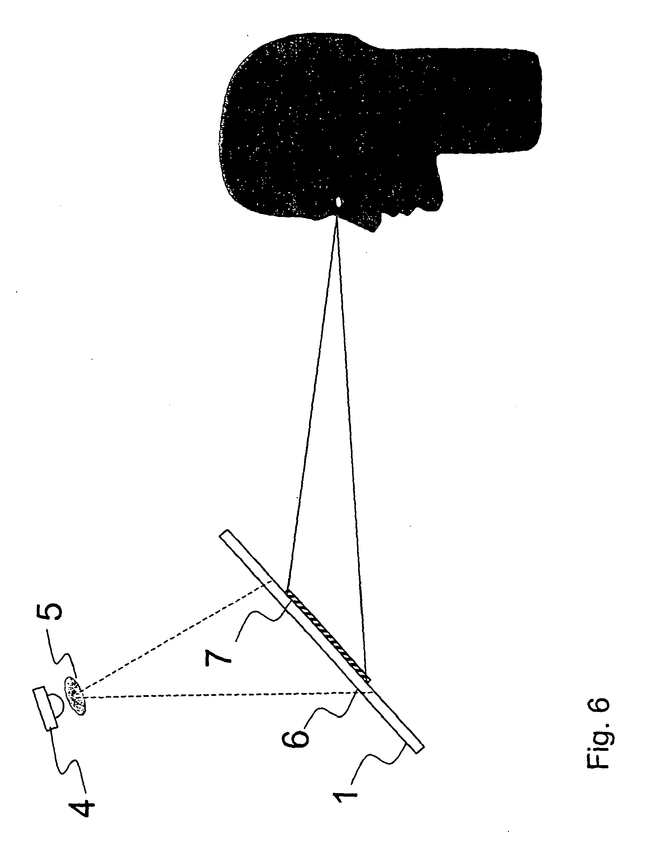

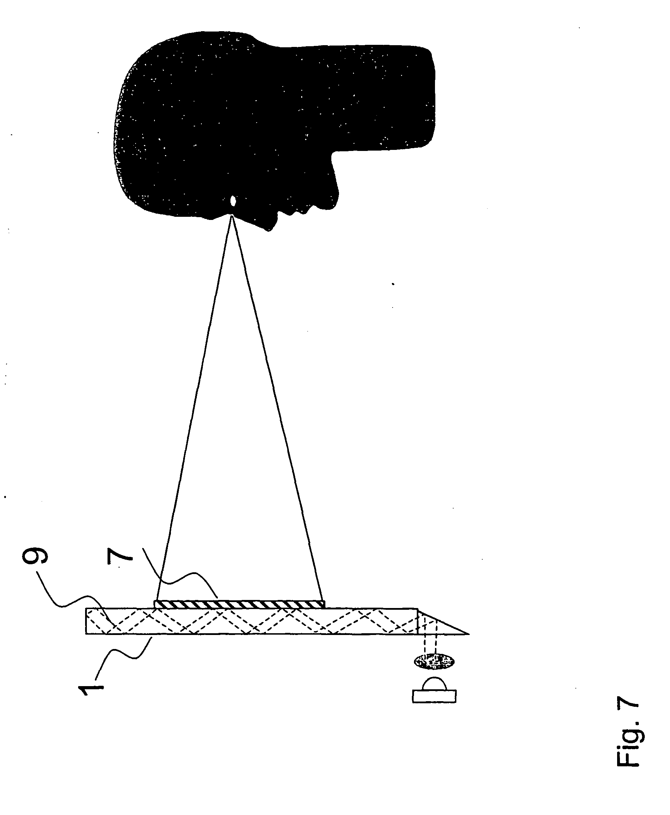

In one embodiment which does not form part of the invention, the source 4 of UV/blue radiation is positioned on the side of the panel that has the photoluminescent coating, as represented in Figures 4 and 5b. Alternatively, the source can be positioned on the side of the panel opposite to the one that has the photoluminescent coating, as represented in Figure 6, which relates to an embodiment which also does not form part of the invention. In a further embodiment not forming part of the invention, represented in Figure 7, the UV/visible radiation can be coupled within the transparent panel through one or more indentations made along the edges of the panel. The UV/blue radiation 9 propagates in this case within the panel by exploiting the phenomenon of total internal reflection (TIR) until it encounters the photoluminescent layer 7 deposited on one of the surfaces of the panel 1. At this layer, the UV/blue radiation 9 is converted into visible radiation, the wavelength of which depends upon the type of photoluminescent material used and which is drawn from the panel. An appropriate design of the optics 5 and of the system for coupling of the radiation in a guide can cause the radiation emitted by different sources 4 to reach distinct areas 7 of photoluminescent material, enabling selective turning-on of the information.

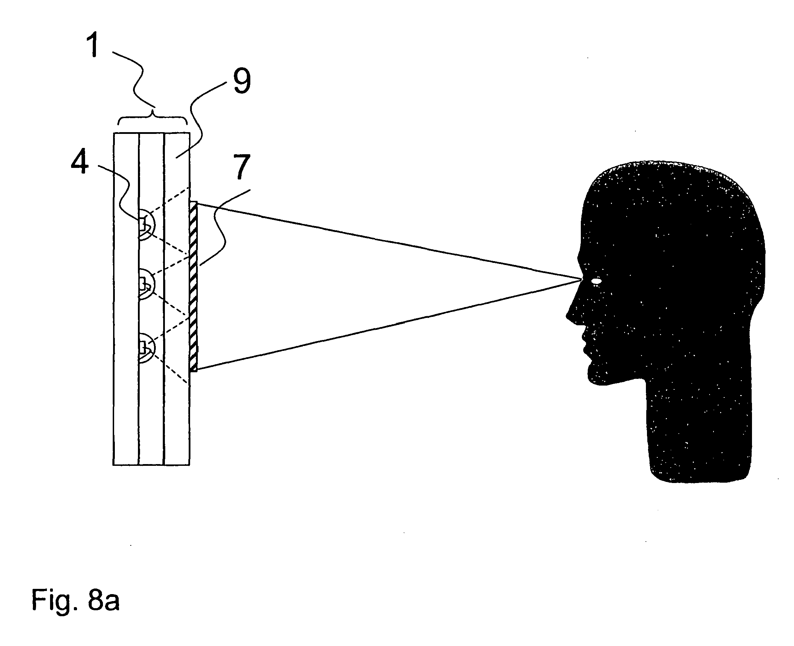

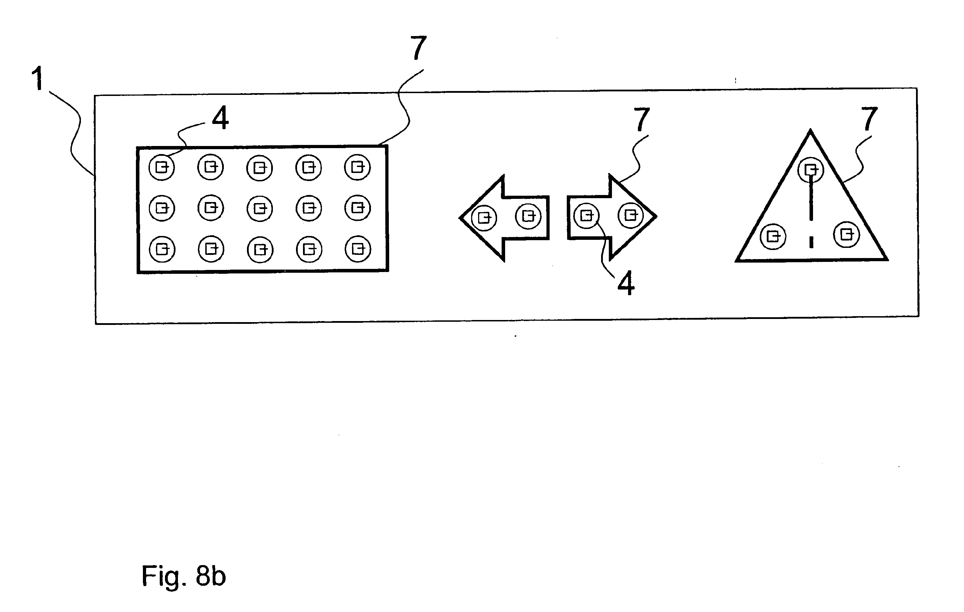

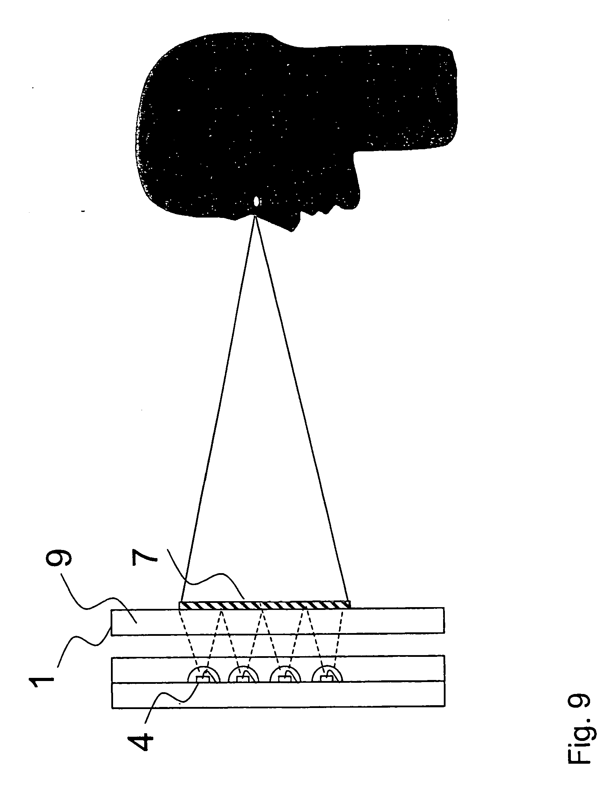

In one embodiment according to the invention, represented in Figure 8, the layer 7 of photoluminescent material is back-lighted by at least one LED source 4 integrated within the panel. Said LED source can be integrated in the form of a die, or an non-packaged element of semiconductor wafer using technologies of the chip-on-board type, according to the teachings of the patent applications Nos. EP05425256.4, EP05425255.6 and EP05425254.9, presented by the present applicant. In this embodiment, the LED source emits UV/blue radiation that is subsequently converted into visible radiation by the layer of photoluminescent material 7. In the case of a blue LED, the photoluminescent layer can be a yellow phosphor of a thickness such as to convert only a fraction of the incident blue radiation. As a result of this, the light emitted by the photoluminescent layer 7 will have the composition of the residual blue radiation, i.e., the radiation not absorbed by the photoluminescent layer 7, and of the yellow radiation emitted by the photoluminescent layer 7. The resultant, if the two components are appropriately balanced, may be white light. In a variant of this preferred embodiment, represented in Figure 9, the LED source/sources 4 can be integrated in a transparent panel, but separated from the panel 1 that has the photoluminescent coating, so that said panel 1 is set between the user and said panel integrating the LED sources 4.

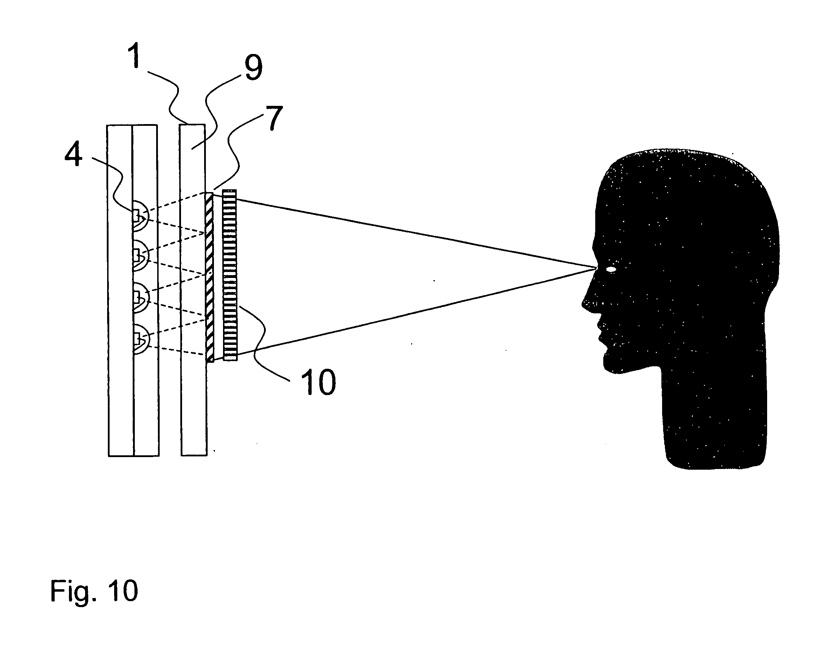

As illustrated in Figure 10, at least one of the areas 7 that have the photoluminescent coating can be used as back-lighter for a liquid-crystal display (or LCD) 10 of the transmissive type. If the transparency of the LCD, in the state of maximum transmittance, is sufficiently high, this enables back-lighted and at the same time transparent LCDs to be obtained. The concept lends itself in particular to the configurations represented in Figures 6, 7, 8 and 9.

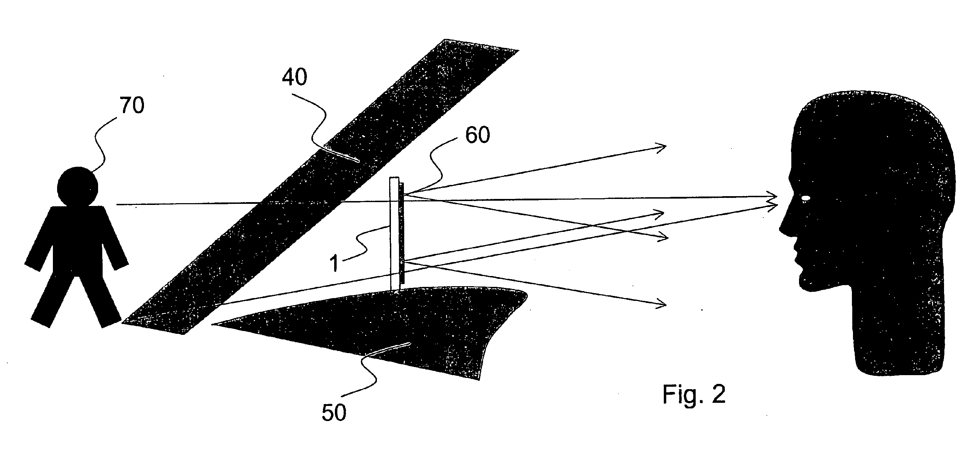

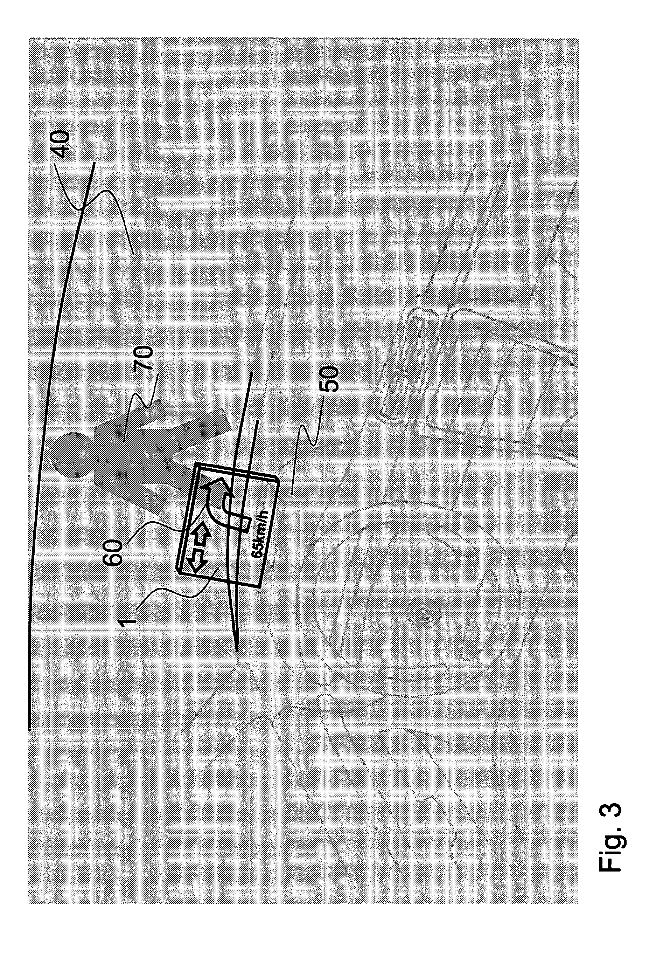

As illustrated in Figures 2 and 3, the transparent panel can be installed on the dashboard 50 of the vehicle and positioned in the proximity of the windscreen 40. Alternatively, the transparent panel 1 is glued on the windscreen itself. In a further preferred embodiment, the photoluminescent layer is deposited directly on the windscreen, for example by silk-screen printing or tampography.

In the display according to the present invention, the image 60 is presented directly on the transparent panel, i.e., is a "real" image, contrary to what occurs in the HUD of the known art, where the image 60 is "virtual".

In a way similar to what occurs in the HUD of the known art, also in the display according to the present invention the image 60 is at least in part superimposed upon the background 70 visible to the driver through the windscreen 40.

The advantages of the solution proposed are multiple and described in what follows with reference to points i, ii, iii, iv and v referred to above.
I. The cost of the device is reduced with respect to solutions of the known art, in so far as the system does not call for costly projection optics, such as aspherical lenses and mirrors, typically used for compensating the distortions induced by the asphericity of the windscreen.
II. Installation is carried out simply by positioning the screen on the dashboard in a position corresponding to the windscreen and is visible from any angle, thus not requiring sophisticated and complex procedures of alignment; moreover, the installation does not call for the use of sophisticated mechanics for positioning and alignment of said optics.
III. The encumbrance involved in installation is minimal in so far as the system is not based upon the principle of projection, but rather on emission by the panel; the encumbrance of installation is thus limited to the UV and/or blue radiation sources and to the possible optics for shaping of the beam emitted by the sources; the encumbrance is less than 200 ml as against the 3-4 1 of a HUD solution of the known art.
IV. The consumption levels are reduced in so far as the effective luminance of the display is equal to the luminance of the photoluminescent layer under stimulation of UV radiation; by way of example, to obtain with a HUD solution of the known art an effective luminance of 5000 cd/m² (as required by automotive specifications), sources are used that emit over 150 lumen in all. The solution proposed herein enables, given the same luminance and field of view, use of less than 80 lumen in all.
V. The HMB of the solution proposed herein is practically unlimited in so far as the sources emit in a lambertian way.

The transparency of the display enables installation on motor vehicles up against of the windscreen and hence at a distance from the driver greater than the distance of traditional displays integrated in the instrument panel on board the vehicle. This implies that, even though the image generated by the display is real (as opposed to the HUDs of the known art, which generate a virtual image), the distance between the driver and the image is maximized, so reducing accommodation of the focal length of the eye when the gaze of the driver shifts from the background to the display, and vice versa.

Typically, the HUDs of the known art present the image at a distance of 1.5-2.5 m from the driver, whereas the solution proposed herein enables reaching a maximum distance of 1-1.2 m (on account of the physical constraints imposed by the windscreen). Even though the distance of the image is not sufficiently large to eliminate completely the effort of accommodation, the display of the present invention enables superimposition of the image on the background so as to minimize turning of the head and/or of the eyes necessary for gaining access to the visual information. From the latter standpoint, the display proposed herein is similar to a HUD of the known art, without this implying any prejudice to the advantages described above in points I, II, III, IV, and V.

It should be noted how the fact that the focal distance is less than that of a classic HUD, albeit implying a greater effort of accommodation on the part of the user, presents, however, an ergonomic advantage in so far as the change of focal length necessary for shifting his gaze from the background 70 to the information 60 presented on the display implies a voluntary intent on the part of the user. In a classic HUD display, instead, the image 60 of the display and the background 70 can be focused by the user almost simultaneously (thanks to the minor difference between the distances of accommodation corresponding to said images 60 and 70), which implies:
- the need for the brain to elaborate and separate continuously the visual information corresponding to the real plane of the background 70 and the virtual plane of the image 60; and
- the risk, in the presence of a more luminous or more contrasted image 60 of the background 70 (for example, in conditions of poor visibility), that the attention of the user might be captured by the image of the display, so reducing his concentration on the primary task of driving.

## Claims

1. A device for the display of optical information on a transparent medium, particularly for motor vehicles, to be used for the transmission of optical information (60) visible by a user, said device comprising:
- a transparent panel (1), through which a background is visible;
- a layer of photoluminescent material provided at least on part of said panel (1);
- means (4) for emitting an ultraviolet (UV) or blue radiation;
- optical means (5) for conveying said radiation emitted by said emitter means (4) on said transparent panel (1),
said photoluminescent material being designed to absorb said radiation emitted by said emitter means (4) and to re-emit visible radiation of wavelength longer than the one absorbed,
so that associated to said visible radiation re-emitted by the photoluminescent material is an image superimposed upon the background (70) carrying said optical information visible by the user,
wherein said emitter means comprise a plurality of sources (4) of UV or blue radiation that are associated, individually or in groups, to different areas (7, 7') of the transparent panel, so that selective turning-on of said sources (4), individually or in groups, produces the emission of optical information that is different for different areas of the transparent panel,
**characterized in that** the source (4) of UV/blue radiation is located on the side of the panel opposite to the one having the photoluminescent coating and
**in that** the layer (7) of photoluminescent material is back-lighted by at least one LED source (4) integrated within the panel.

2. The device according to Claim 1, **characterized in that** said LED source is in the form of a die, i.e., a non-packaged element of semiconductor wafer integrated within the panel using technologies of the chip-on-board type.

3. The device according to Claim 1, **characterized in that** said LED source is a blue LED, and said photoluminescent layer (7) is a yellow phosphor with a thickness such as to absorb only a fraction of the incident radiation emitted by said blue LED, the superposition of the fraction of blue radiation not absorbed and of the yellow radiation emitted by said photoluminescent layer (7) resulting in the emission of white light.

4. The device according to Claim 1, **characterized in that** the LED source/sources (4) are integrated in a transparent panel, but separate from the panel (1) that has the photoluminescent coating.

5. The device according to Claim 4, **characterized in that** one or more areas (7) that have the photoluminescent coating are used as back-lighter for a liquid-crystal display (LCD) (10), of the transmissive type.

6. The device according to Claim 1, **characterized in that** the photoluminescent material is deposited selectively on said areas (7) of the transparent panel so as to form the images to be displayed, the optical information associated to each of said areas (7) being produced by irradiating in a substantially uniform way a portion (6) of the panel comprising said associated area (7).

7. The device according to Claim 6, **characterized in that** the photoluminescent material is deposited so as to form only the contour of the images to be displayed, in the form of straight lines and/or curved lines.

8. The device according to Claim 7, **characterized in that** the photoluminescent material is constituted by a dispersion of phosphors of the opaque and/or diffusive, but not transparent, type.

9. The device according to Claim 8, **characterized in that** said phosphors are constituted by particles of micrometric dimensions of a material chosen from among Zn₂SiO₄:Mn (green), Y₂O₃:Eu (red), CaSiO₃: Pb: Mn (orange), MgWO₄ (blue); (Y,Gd)BO₃:Eu (red), YVO₄:Eu (red), Zn₂SiO₄:Mn (green), BaMg₂Al₁₆O₂₇:Eu (blue), and Ce³⁺-doped (Y, Gd)₃ Al₅O₁₂ (yellow).

10. The device according to Claim 9, **characterized in that** the size of the microparticles of phosphorus is close on the wavelength of visible radiation (380-780 nm).

11. The device according to Claim 6, **characterized in that** the photoluminescent material is deposited so as to constitute the entire surface forming the image to be displayed.

12. The device according to Claim 11, **characterized in that** the photoluminescent material is constituted by a dispersion of phosphors of a transparent type.

13. The device according to Claim 12, **characterized in that** said phosphors of a transparent type are semiconductor or metallic nanocrystals, or else organic/polymeric molecules.

14. The device according to Claim 13, **characterized in that** said phosphors are of a material chosen from among: i) electroluminescent polymers (light-emitting polymers, or LEPs), such as polyfluorene or polyphenylenevinylene (PPV); ii) organic molecules with lower molecular weight (small molecules), such as AlQ₃; iii) inorganic molecules of the rare-earth-oxide type (europium oxide, terbium oxide, Y₂O₃:Eu, etc.) in crystalline or amorphous form; iv) semiconductor nanocrystals of type II-VI (CdTe, cdSe, etc.), III-V (GaN, GaP, etc.) or hybrids, also in the form of the core-shell type (e.g., cdSe:ZnS); and v) subnanometric metallic crystals (Ag, Au, Au-Ag alloys, etc.).

15. The device according to Claim 14, **characterized in that**, in the case of options iv) and v), the nanocrystals are dispersed in a polymeric matrix, or else, in a vitreous matrix of oxide (for example, SiO₂).

16. The device according to Claim 6, **characterized in that** the photoluminescent materials deposited on different areas (7) are different, in such a way as to produce, when irradiated by UV/blue radiation, radiation of different colours.

17. The device according to Claim 1, **characterized in that** the transparent panel is installed on the dashboard (50) of a vehicle and positioned in the proximity of the windscreen (40), or alternatively the transparent panel 1 is glued on the windscreen itself.

18. The device according to Claim 1, **characterized in that** the photoluminescent layer is deposited directly on the windscreen through techniques such as silk-screen printing or tampography.

19. The device according to Claim 1, **characterized in that** the photoluminescent material is deposited in a uniform layer (8) on said panel, said uniform layer (8) comprising said areas (7').

20. The device according to Claim 19, **characterized in that** the visual information on said panel is generated through the use of focusing optics (5), designed to collect the UV/blue radiation emitted by said sources (4) and shape it and direct it onto said areas (7').

21. The device according to Claim 18, **characterized in that** said optics (5) are of the type operating in refraction, reflection, or diffraction.

## Patentansprüche

1. Vorrichtung für die Anzeige optischer Informationen auf einem transparenten Medium, insbesondere für Kraftfahrzeuge, das für die Übertragung optischer Informationen (60) verwendet werden soll, die für einen Benutzer zu erkennen sind, wobei die Vorrichtung enthält:
- ein transparentes Paneel (1), durch das ein Hintergrund sichtbar ist;
- eine Schicht eines Fotolumineszenzmaterials, das auf wenigstens einem Teil des Paneels (1) vorgesehen ist;
- Einrichtungen (4), die eine ultraviolette (UV) oder blaue Strahlung emittieren;
- eine optische Einrichtung (5), die die Strahlung, die von den Emittiereinrichtungen (4) emittiert wird, auf dem transparenten Paneel (1) leitet,
wobei das Fotolumineszenzmaterial so beschaffen ist, dass es die Strahlung absorbiert, die von den Emittiereinrichtungen (4) emittiert wird, und sichtbare Strahlung einer Wellenlänge reemittiert, die länger ist als die der absorbierten Strahlung,
so dass der sichtbaren Strahlung, die durch das Fotolumineszenzmaterial reemittiert wird, ein Bild zugeordnet wird, das auf dem Hintergrund (70) überlagert wird, der die optischen Informationen anzeigt, die vom Benutzer erkannt werden,
wobei die Emittiereinrichtungen eine Vielzahl von Quellen (4) einer ultravioletten oder blauen Strahlung beinhalten, die einzeln oder in Gruppen unterschiedlichen Bereichen (7, 7') des transparenten Paneels zugeordnet sind, so dass das selektive Einschalten dieser Quellen (4), einzeln oder in Gruppen, die Emission optischer Informationen erzeugt, die sich für unterschiedliche Bereiche des transparenten Paneels unterscheiden,
**dadurch gekennzeichnet, dass** sich die Quelle (4) der ultravioletten/blauen Strahlung auf der Seite des Paneels befindet, die jener gegenüberliegt, die über die fotolumineszente Beschichtung verfügt,
und dass die Schicht (7) des Fotolumineszenzmaterials von wenigstens einer LED-Quelle (4) hintergrundbeleuchtet ist, die in das Paneel integriert ist.

2. Vorrichtung nach Anspruch 1, **dadurch gekennzeichnet, dass** die LED-Quelle die Gestalt eines Würfels hat, d.h. eines nicht gepackten Elementes eines Halbleiter-Wafers, der in das Paneel mit Hilfe von Technologien des Chip-On-Board-Typs integriert ist.

3. Vorrichtung nach Anspruch 1, **dadurch gekennzeichnet, dass** die LED-Quelle eine blaue LED ist und die fotolumineszente Schicht (7) gelber Phosphor mit einer Dicke ist, die so beschaffen ist, dass lediglich ein Bruchteil der eintreffenden Strahlung, die von der blauen LED emittiert wird, absorbiert wird, wobei die Überlagerung des Bruchteils der blauen Strahlung, die nicht absorbiert wird, mit der gelben Strahlung, die von der Fotolumineszenzschicht(7) emittiert wird, zu einer Emission von weißem Licht führt.

4. Vorrichtung nach Anspruch 1, **dadurch gekennzeichnet, dass** die LED-Quelle / die LED-Quellen (4) in ein transparentes Paneel integriert ist/sind, jedoch von dem Paneel (1) getrennt ist/sind, das über die Fotolumineszenzbeschichtung verfügt.

5. Vorrichtung nach Anspruch 4, **dadurch gekennzeichnet, dass** wenigstens ein Bereich (7), der über die Fotolumineszenzbeschichtung verfügt, als Hintergrundbeleuchtung für eine Flüssigkristallanzeigevorrichtung (LCD) (10) des durchlässigen Typs verwendet wird.

6. Vorrichtung nach Anspruch 1, **dadurch gekennzeichnet, dass** das Fotolumineszenzmaterial selektiv auf den Bereichen (7) des transparenten Paneels abgeschieden ist, um so die anzuzeigenden Bilder auszubilden, wobei die optischen Informationen, die jedem der Bereiche (7) zugeordnet sind, durch Bestrahlen eines Abschnittes (6) des Paneels, das den zugeordneten Bereich (7) enthält, in einer im wesentlichen einheitlichen Art und Weise erzeugt werden.

7. Vorrichtung nach Anspruch 6, **dadurch gekennzeichnet, dass** das fotolumineszente Material derart abgeschieden ist, dass es lediglich den Umriss der anzuzeigenden Bilder in Gestalt von geraden Linien und/oder gekrümmten Linien ausbildet.

8. Vorrichtung nach Anspruch 7, **dadurch gekennzeichnet, dass** das Fotolumineszenzmaterial durch eine Abscheidung von Phosphoren des opaken und/oder des streuenden, jedoch nicht transparenten Typs gebildet ist.

9. Vorrichtung nach Anspruch 8, **dadurch gekennzeichnet, dass** die Phosphore aus Partikeln mikrometrischer Abmessungen eines Materials bestehen, das gewählt ist aus: Zn₂SiO₄:MN (Grün), Y₂O₃:Eu (Rot), CaSiO₃: Pb: Mn (Orange), MgWO₄ (Blau), (Y,Gd)BO₃:Eu (Rot), YVO₄:Eu (Rot), Zn₂SiO₄:Mn (Grün), BaMg₂Al₁₆O₂₇:Eu (Blau) und Ce³⁺-dotiertes (Y,Gd)₃ Al₅O₁₂ (Gelb).

10. Vorrichtung nach Anspruch 9, **dadurch gekennzeichnet, dass** die Größe der Mikropartikel aus Phosphor nahe der Wellenlänge sichtbarer Strahlung (380-780 nm) liegt.

11. Vorrichtung nach Anspruch 6, **dadurch gekennzeichnet, dass** das Fotolumineszenzmaterial derart abgeschieden ist, dass es die gesamte Oberfläche bildet, die das anzuzeigende Bild erzeugt.

12. Vorrichtung nach Anspruch 11, **dadurch gekennzeichnet, dass** das Fotolumineszenzmaterial durch eine Abscheidung von Phosphoren eines transparenten Typs gebildet ist.

13. Vorrichtung nach Anspruch 12, **dadurch gekennzeichnet, dass** die Phosphore eines transparenten Typs halbleitende oder metallische Nanokristalle oder andernfalls organische/polymerische Moleküle sind.

14. Vorrichtung nach Anspruch 13, **dadurch gekennzeichnet, dass** die Phosphore aus einem Material bestehen, das gewählt ist aus: i) elektrolumineszenten Polymeren (lichtemittierenden Polymeren oder LEPs), wie etwa Polyfluoren oder Polyphenylenvinylen (PPV); ii) organischen Molekülen mit einem geringeren Molekulargewicht (kleine Moleküle), wie etwa AlQ₃; iii) anorganischen Molekülen des Seltenerden-Oxidtyps (Europiumoxid, Terbiumoxid, Y₂O₃:Eu, etc.) in kristalliner oder amorpher Form; iv) Halbleiternanokristallen des Typs II-VI (CdTe, cdSe, etc.), III-V (GaN, GaP, etc.) oder Hybriden, auch in Gestalt des Kernschalentyps (z.B. cdSe:ZnS); und v) subnanometrischen Metallkristallen (Ag, Au, Au-Ag-Legierungen, etc.).

15. Vorrichtung nach Anspruch 14, **dadurch gekennzeichnet, dass** im Fall der Optionen iv) und v) die Nanokristalle in einer Polymermatrix oder andernfalls in einer glasartigen Oxidmatrix (wie etwa SiO₂) verteilt sind.

16. Vorrichtung nach Anspruch 6, **dadurch gekennzeichnet, dass** die Fotolumineszenzmaterialien, die auf unterschiedlichen Bereichen (7) abgeschieden sind, dahingehend unterschiedlich sind, dass sie bei Bestrahlung mit ultravioletter/blauer Strahlung eine Strahlung unterschiedlicher Farben erzeugen.

17. Vorrichtung nach Anspruch 1, **dadurch gekennzeichnet, dass** das transparente Paneel am Armaturenbrett (50) eines Fahrzeuges angeordnet und in der Nähe der Windschutzscheibe (40) positioniert ist, oder alternativ dazu das transparente Paneel 1 an die Windschutzscheibe an sich geklebt ist.

18. Vorrichtung nach Anspruch 1, **dadurch gekennzeichnet, dass** die Fotolumineszenzschicht direkt auf der Windschutzscheibe durch Techniken, wie etwa Siebdruck oder Tampografie, abgeschieden ist.

19. Vorrichtung nach Anspruch 1, **dadurch gekennzeichnet, dass** das Fotolumineszenzmaterial in einer einheitlichen Schicht (8) auf dem Paneel abgeschieden ist, wobei die einheitliche Schicht (8) die Bereiche (7') enthält.

20. Vorrichtung nach Anspruch 19, **dadurch gekennzeichnet, dass** die visuellen Informationen auf dem Paneel mit Hilfe von Fokussieroptiken (5) erzeugt werden, die so beschaffen sind, dass sie die ultraviolette/blaue Strahlung sammeln, die von den Quellen (4) emittiert wird, diese formen und sie auf die Bereiche (7') richten.

21. Vorrichtung nach Anspruch 18, **dadurch gekennzeichnet, dass** die Optiken (5) von dem Typ sind, der mit Brechung, Reflexion oder Streuung arbeitet.

## Revendications

1. Dispositif pour l'affichage d'informations optiques sur un support transparent, en particulier pour véhicules à moteur, destiné à être utilisé pour la transmission d'informations optiques (60) visibles par un utilisateur, ledit dispositif comprenant :
- un panneau transparent (1), à travers lequel un arrière-plan est visible ;
- une couche de matériau photoluminescent disposée au moins sur une partie dudit panneau (1) ;
- des moyens (4) pour émettre un rayonnement ultraviolet (UV) ou bleu ;
- des moyens optiques (5) pour convoyer ledit rayonnement émis par lesdits moyens émetteurs (4) sur ledit panneau transparent (1),
ledit matériau photoluminescent étant conçu pour absorber ledit rayonnement émis par lesdits moyens émetteurs (4) et pour réémettre un rayonnement visible ayant une longueur d'onde supérieure à celle absorbée,
de façon qu'audit rayonnement visible réémis par le matériau photoluminescent soit associée une image superposée sur l'arrière-plan (70) portant lesdites informations optiques visibles par l'utilisateur,
dans lequel lesdits moyens émetteurs comprennent une pluralité de sources (4) de rayonnement UV ou bleu qui sont associées, individuellement ou en groupes, à des zones (7, 7') différentes du panneau transparent, de façon qu'une mise en service sélective desdites sources (4), individuellement ou en groupes, produise l'émission d'informations optiques qui sont différentes pour des zones différentes du panneau transparent,
**caractérisé en ce que** la source (4) de rayonnement UV/bleu est localisée sur le côté du panneau opposé à celui ayant le revêtement photoluminescent et
**en ce que** la couche (7) de matériau photoluminescent est rétro-éclairée par au moins une source à DEL (4) intégrée à l'intérieur du panneau.

2. Dispositif selon la revendication 1, **caractérisé en ce que** ladite source à DEL est sous la forme d'une matrice, c'est-à-dire d'un élément non encapsulé de galette à semi-conducteur intégré à l'intérieur du panneau utilisant des technologies du type à montage direct des puces.

3. Dispositif selon la revendication 1, **caractérisé en ce que** ladite source à DEL est une DEL bleue, et ladite couche photoluminescente (7) est une substance fluorescente jaune ayant une épaisseur telle qu'elle absorbe uniquement une fraction du rayonnement incident émis par ladite DEL bleue, la superposition de la fraction de rayonnement bleu non absorbée et du rayonnement jaune émis par ladite couche photoluminescente (7) ayant pour résultat l'émission de lumière blanche.

4. Dispositif selon la revendication 1, **caractérisé en ce que** la source/les sources à DEL (4) sont intégrées dans un panneau transparent, mais séparées du panneau (1) qui a le revêtement photoluminescent.

5. Dispositif selon la revendication 4, **caractérisé en ce qu'**une ou plusieurs zones (7) qui ont le revêtement photoluminescent sont utilisées en tant que dispositif de rétro-éclairage pour un dispositif d'affichage à cristaux liquides (LCD) (10), du type transmissif.

6. Dispositif selon la revendication 1, **caractérisé en ce que** le matériau photoluminescent est déposé sélectivement sur lesdites zones (7) du panneau transparent de façon à former les images devant être affichées, les informations optiques associées à chacune desdites zones (7) étant produites par irradiation d'une manière sensiblement uniforme d'une partie (6) du panneau comprenant ladite zone associée.

7. Dispositif selon la revendication 6, **caractérisé en ce que** le matériau photoluminescent est déposé de façon à former uniquement le contour des images devant être affichées, sous la forme de lignes droites et/ou de lignes incurvées.

8. Dispositif selon la revendication 7, **caractérisé en ce que** le matériau photoluminescent est constitué d'une dispersion de substances fluorescentes du type opaque et/ou diffusif, mais pas du type transparent.

9. Dispositif selon la revendication 8, **caractérisé en ce que** lesdites substances fluorescentes sont constituées de particules de dimensions micrométriques d'un matériau choisi parmi Zn₂SiO₄:Mn (vert), Y₂O₃:Eu (rouge), CaSiO₃:Pb:Mn (orange), MgWO₄ (bleu) ; (Y,Gd)BO₃:Eu (rouge), YVO₄:Eu (rouge), Zn₂SiO₄:Mn (vert), BaMg₂Al₆O₂₇:Eu (bleu), et (Y,Gd)₃Al₅O₁₂ dopé au Ce³⁺ (jaune).

10. Dispositif selon la revendication 9, **caractérisé en ce que** la taille des microparticules de phosphore est proche de la longueur d'onde du rayonnement visible (380-780 nm).

11. Dispositif selon la revendication 6, **caractérisé en ce que** le matériau photoluminescent est déposé de façon à constituer toute la surface formant l'image devant être affichée.

12. Dispositif selon la revendication 11, **caractérisé en ce que** le matériau photoluminescent est constitué d'une dispersion de substances fluorescentes de type transparent.

13. Dispositif selon la revendication 12, **caractérisé en ce que** lesdites substances fluorescentes de type transparent sont des nanocristaux semi-conducteurs ou métalliques, ou sinon des molécules organiques/ polymères.

14. Dispositif selon la revendication 13, **caractérisé en ce que** lesdites substances fluorescentes sont en un matériau choisi parmi : i) les polymères électroluminescents (polymères luminescents, ou LEP) ; tels que le polyfluorène ou le polyphénylènevinylène (PPV) ; ii) les molécules organiques de plus faible masse moléculaire (petites molécules), telles qu'AlQ₃ ; iii) les molécules inorganiques de type oxyde des terres rares (oxyde d'europium, oxyde de terbium, Y₂O₃:Eu, etc.) sous forme cristalline ou amorphe ; iv) les nanocristaux semi-conducteurs de type II-VI (CdTe, CdSe, etc.), III-V (GaN, GaP, etc.) ou hybrides, également sous la forme du type coeur-gaine (par exemple CdSe:ZnS); et v) les cristaux métalliques sous-nanométriques (Ag, Au, alliages Au-Ag, etc.).

15. Dispositif selon la revendication 14, **caractérisé en ce que**, dans le cas des options iv) et v), les nanocristaux sont dispersés dans une matrice polymère, ou sinon dans une matrice vitreuse d'oxyde (par exemple SiO₂).

16. Dispositif selon la revendication 6, **caractérisé en ce que** les matériaux photoluminescents déposés sur des zones différentes (7) sont différents, de façon à produire, lorsqu'ils sont irradiés par un rayonnement UV/bleu, un rayonnement de différentes couleurs.

17. Dispositif selon la revendication 1, **caractérisé en ce que** le panneau transparent est installé sur le tableau de bord (50) d'un véhicule et positionné à proximité du pare-brise (40), ou, en variante, le panneau transparent (1) est collé sur le pare-brise lui-même.

18. Dispositif selon la revendication 1, **caractérisé en ce que** la couche photoluminescente est déposée directement sur le pare-brise au moyen de techniques telles que la sérigraphie ou la tampographie.

19. Dispositif selon la revendication 1, **caractérisé en ce que** le matériau photoluminescent est déposé en une couche uniforme (8) sur ledit panneau, ladite couche uniforme (8) comprenant lesdites zones (7').

20. Dispositif selon la revendication 19, **caractérisé en ce que** les informations visuelles sur ledit panneau sont générées par l'utilisation d'optiques de focalisation (5), conçues pour collecter le rayonnement UV/bleu émis par lesdites sources (4) et le façonner et le diriger sur lesdites zones (7').

21. Dispositif selon la revendication 18, **caractérisé en ce que** lesdites optiques (5) sont du type opérant en réfraction, réflexion, ou diffraction.
